(19) Europäisches Patentamt / European Patent Office / Office européen des brevets

(11) **EP 2 517 037 B1**

(12) **FASCICULE DE BREVET EUROPEEN**

(45) Date de publication et mention
de la délivrance du brevet:
**02.10.2013 Bulletin 2013/40**

(21) Numéro de dépôt: **10792940.8**

(22) Date de dépôt: **17.12.2010**

(51) Int Cl.:
*G01S 3/74* (2006.01)     *G01S 3/80* (2006.01)

(86) Numéro de dépôt international:
**PCT/EP2010/070138**

(87) Numéro de publication internationale:
**WO 2011/076696 (30.06.2011 Gazette 2011/26)**

(54) **PROCEDE POUR ESTIMER LE NOMBRE DE SOURCES INCIDENTES A UN RESEAU DE CAPTEURS PAR ESTIMATION DE LA STATISTIQUE DU BRUIT**

VERFAHREN ZUR KALKULATION DER ANZAHL VON STÖRQUELLEN EINER SENSORANORDNUNG MITTELS KALKULATION VON RAUSCHSTATISTIKEN

METHOD FOR ESTIMATING THE NUMBER OF INCIDENT SOURCES IN A SENSOR ARRAY BY MEANS OF ESTIMATING NOISE STATISTICS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2009 FR 0906216**

(43) Date de publication de la demande:
**31.10.2012 Bulletin 2012/44**

(73) Titulaires:
• **Thales**
**92200 Neuilly Sur Seine (FR)**
• **Ferreol, Anne**
**92700 Colombes (FR)**

(72) Inventeurs:
• **GERMONT, Cécile**
**92700 Colombes (FR)**
• **CHEVALIER, Pascal**
**92700 Colombes (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

• **KRITCHMAN S ET AL: "Nonparametric detection of the number of signals and random matrix theory", SIGNALS, SYSTEMS AND COMPUTERS, 2008 42ND ASILOMAR CONFERENCE ON, IEEE, PISCATAWAY, NJ, USA, 26 octobre 2008 (2008-10-26), pages 1680-1683, XP031475587, ISBN: 978-1-4244-2940-0**
• **CHEN W ET AL: "Detection of the number of signals: a predicted eigen-threshold approach", IEEE TRANSACTIONS ON SIGNAL PROCESSING, IEEE SERVICE CENTER, NEW YORK, NY, US LNKD- DOI:10.1109/78.80959, vol. 39, no. 5, 1 mai 1991 (1991-05-01), pages 1088-1098, XP002506761, ISSN: 1053-587X**
• **BAI, XIAOXIAO; HE, BIN: "Estimation of number of independent brain electric sources from the scalp EEGs", IEEE TRANSACTIONS ON BIOMEDICAL ENGINEERING, vol. 53, no. 10, octobre 2006 (2006-10), pages 1883-1892, XP002592411,**
• **KRITCHMAN S ET AL: "Non-Parametric Detection of the Number of Signals: Hypothesis Testing and Random Matrix Theory", IEEE TRANSACTIONS ON SIGNAL PROCESSING, IEEE SERVICE CENTER, NEW YORK, NY, US LNKD- DOI: 10.1109/TSP.2009.2022897, vol. 57, no. 10, 1 octobre 2009 (2009-10-01), pages 3930-3941, XP011268796, ISSN: 1053-587X**

(56) Documents cités:
**JP-A- 4 066 887**

- FENG ZHANG ET AL: "A Bayesian method for identifying independent sources of non-random spatial patterns", STATISTICS AND COMPUTING, KLUWER ACADEMIC PUBLISHERS, BO LNKD-DOI:10.1007/S11222-005-4075-6, vol. 15, no. 4, 1 octobre 2005 (2005-10-01), pages 329-339, XP019215638, ISSN: 1573-1375

- AAPO HYVÄRINENHYVARINEN: "Blind Source Separation by Nonstationarity of Variance: A Cumulant-Based Approach", IEEE TRANSACTIONS ON NEURAL NETWORKS, IEEE SERVICE CENTER, PISCATAWAY, NJ, US, vol. 12, no. 6, 1 novembre 2001 (2001-11-01), XP011039689, ISSN: 1045-9227

**Description**

L'invention concerne notamment un procédé et son système associé permettant d'estimer le nombre de sources incidentes dans un réseau comportant C capteurs ou antennes sur lesquels N observations sont exploitées.

Pour la description qui va suivre, les notations suivantes vont être utilisées :

- C nombre de capteurs de réception,
- N nombre d'observations non redondantes exploitées, par exemple, N=C si on considère uniquement les statistiques d'ordre 2 du signal reçu, N=f(C$^q$) où f(.) est une fonction polynomiale de N d'ordre Ent(q/2) si on considère les statistiques d'ordre q,
- K le nombre d'échantillons de signal pour chaque observation,
- M est le nombre de sources à estimer,
- **x**(t) est le signal reçu sur le réseau de capteurs, vecteur de taille C.

Le problème de l'estimation du nombre de sources présentes dans un mélange constitue une étape cruciale dans les systèmes d'écoute passive avant la mise en oeuvre de traitements de localisation à haute résolution, de techniques de séparation, ou encore de démodulation conjointe. Il s'agit de détecter (M) sources avec M compris entre 0 et N-1 où N est le nombre d'observations non redondantes exploitées sur les C capteurs de l'antenne de réception.

Dans un contexte électromagnétique, les capteurs sont des antennes et les sources radioélectriques se propagent suivant une polarisation. Dans un contexte acoustique les capteurs sont des microphones et les sources sont sonores.

Les méthodes classiques d'estimation du nombre de sources présentes dans un mélange reposent par exemple sur des tests statistiques basés sur les valeurs propres (VP) de la matrice de covariance du signal reçu sur les capteurs de l'antenne de réception. Ces tests sont basés sur la connaissance de la loi de probabilité de la fluctuation des valeurs propres de bruit sachant que la matrice de covariance du signal est estimée à partir de K échantillons statistiquement indépendants et que le bruit est supposé blanc et gaussien.

Les valeurs propres les plus fortes de la matrice de covariance correspondent aux valeurs propres de signal tandis que les valeurs les plus faibles de la matrice correspondent en général au bruit. En asymptotique (K tend vers l'infini) et en présence d'un bruit blanc les valeurs propres de bruit sont toutes identiques. Pour un nombre fini K d'échantillons, on observe des fluctuations qui rendent la séparation entre les valeurs propres de signal et les valeurs propres de bruit non immédiate. Pour faire face à ces fluctuations statistiques, les tests les plus classiques sont les tests du chideux, AIC et MDL qui vont être détaillés ci-après et qui exploitent la statistique supposée gaussienne du bruit blanc.

**Test du chi-deux**

Ce test consiste à estimer le rapport de vraisemblance des valeurs propres de bruit et à tester de façon croissante différentes hypothèses sur le nombre N-M de valeurs propres de bruit

$$RV(M) = 2K(N-M)\log\left(\frac{g(N-M)}{a(N-M)}\right)$$

où g(N-M) et a(N-M) représentent les moyennes géométriques et arithmétiques des (N-M) plus petites valeurs propres de la matrice de covariance **B** de l'observation, K étant le nombre d'échantillons observés. Le rapport de vraisemblance suit asymptotiquement une loi du chi-deux de (N-M)$^2$-1 degrés de liberté car le bruit est supposé blanc et gaussien, ce qui permet de fixer un seuil de détection lorsque le nombre d'échantillons K est élevé (K>30).

**Test AIC (critère d'information d'Akaike) et MDL (Minimum Distance Length)**

Ce critère a été initialement développé par H.Akaike pour déterminer l'ordre d'un modèle [1]. Il est basé sur le calcul du rapport de vraisemblance des valeurs propres de bruit avec ajout d'un terme correctif qui permet de prendre en compte les situations où la valeur de K est faible (par exemple K<30). Le nombre de sources est alors déterminé comme étant le nombre entier qui minimise la quantité suivante :

$$AIC(M) = -K(N-M)\log\left(\frac{g(m)}{a(m)}\right) + m(2N-m)$$

où $g(m)$ et $a(m)$ représentent les moyennes géométriques et arithmétiques des $m=N-M$ plus petites valeurs propres de la matrice de covariance **B** d'une observation, K étant le nombre d'échantillons observés.

Un autre test a été proposé pour faire face au problème de consistance du test AIC, il s'agit du critère de la longueur de distance minimum ou MDL qui introduit un terme correctif modifié.

Une méthode de l'art antérieur [2] est proposée pour détecter le nombre de sources en présence de bruit coloré. Cette méthode repose sur l'hypothèse d'un réseau linéaire et de signaux non corrélés.

**Critères empiriques à seuil**

Les critères statistiques précédents sont basés sur une structure blanche d'un bruit additif qui est Gaussien. Dans la pratique, le bruit n'est ni blanc, ni gaussien. Dans ces conditions, lorsque le nombre d'observations K tend vers l'infini, les valeurs propres de bruit ne sont plus toutes identiques. C'est ainsi que des critères purement empiriques visant à classer les « petites » et les « grandes » valeurs propres ont été proposés. Ces méthodes présentent notamment comme inconvénient de faire des hypothèses fortes soit sur la structure de la matrice de covariance soit sur celle de la matrice de covariance du bruit soit sur celle de la matrice de covariance du signal sans bruit.

**Décroissance du spectre des valeurs propres**

Lorsque des signaux incidents présentent de fortes corrélations ou de faibles écarts angulaires, certaines valeurs propres de l'espace signal deviennent proches de celles du bruit, ce qui conduit à une sous-estimation du nombre de sources. Des méthodes ont été développées pour pallier ce problème, en postulant une loi de répartition empirique des valeurs propres de l'espace bruit. La modélisation de la décroissance peut être linéaire ou exponentielle. L'estimation du nombre de sources repose alors sur la recherche d'un saut significatif dans la décroissance des valeurs propres. Toutefois, il est nécessaire de régler une valeur de seuil de détection qui repose sur l'hypothèse d'un bruit additif et gaussien circulaire.

**Réseaux de neurones**

D'autres méthodes ont été développées autour de réseaux de neurones pour estimer un faible nombre de sources présentes. Ces méthodes imposent une structure sur la matrice de covariance du bruit et présentent une complexité de mise en oeuvre assez importante.

**Filtrage de Wiener**

Des méthodes ont aussi été proposées, basées sur le filtre de Wiener multi-étages [3]. Elles permettent d'éviter la phase de calcul de la matrice de covariance du signal de même que la décomposition en valeurs propres. Il est supposé que le bruit additif est un bruit blanc et que les sources sont générées par un filtre à 3 coefficients et sont incidentes à un réseau linéaire equiespacé. Le test de détection du nombre de sources exploite alors cette structure. Dans la pratique, on ne connaît pas l'étalement temporel des sources et le bruit n'est pas forcément à structure blanche. D'autres méthodes supposent que le bruit est gaussien et spatialement corrélé, deux hypothèses qui ne sont pas forcément vérifiées en situation réelle.

La méthode empirique décrite dans [4] repose sur la modélisation de décroissance exponentielle des valeurs propres de bruit soit

$$r(p) = \exp\left(-\sqrt{\frac{12p}{K(p^2-1)}}\right) \ \text{avec} \ \frac{\lambda_p}{\lambda_{p-1}} = r(p)$$

où $p$ est le nombre de valeurs propres de bruit, $(\lambda_1 \geq \ldots \geq \lambda_N)$ sont les valeurs propres de la matrice de covariance et $K$

est le nombre d'observations utilisées pour estimer la matrice de covariance. Le test de décision bruit ou signal est alors le suivant

$$\left| \lambda_{N-p} - \hat{\lambda}_{N-p} \right| \begin{array}{c} \textit{Hypothèse Bruit} \\ < \\ > \\ \textit{Hypothèse Signal} \end{array} \eta \frac{\lambda_{N-p+1}}{\sqrt{K}} \quad \text{avec} \quad \hat{\lambda}_{N-p} = \frac{\lambda_{N-p+1}}{r(p+1)}$$

Cette méthode, malgré son efficacité présente l'inconvénient de ne pas fonctionner lorsque le nombre d'observations utilisées pour estimer la matrice covariance tend vers l'infini. Elle suppose une structure blanche du bruit et ne fonctionne donc pas en présence de bruit corrélé et coloré.

Il est aussi connu de l'art antérieur le document de : KRITCHMAN S ET AL : "Nonparametric détection of the number of signals and random matrix therory" SIGNALS, SYSTEMS AND COMPUTERS, 2008 42 ND ASILOMAR CONFERENCE ON, IEEE, PISCATAWAY, NL, USA, 26 Octobre 2008 (2008- 10- 26), Pages 1680- 1683, XP031475587- ISBN 978- 1- 4244- 2940- 0. Et celui de : CHEN W ET AL: "Detection of the number of signals : a predicted eigne-threshold approach" IEEE TRANSACTIONS ON SIGNAL PROCESSING, IEEE SERVICE CENTER, NEW YORIK, NY, US LNDK- DOI : 10.1109/78.80959, vol. 39, n°5, 1 mai 1991 (1991- 05- 01), pages 1088- 1098; XP002506761 ISSN 1053- 587X.

D'un point de vue général l'objectif technique est d'estimer le nombre M de composantes du mélange linéaire suivant :

$$\mathbf{r}_k = \sum_{m=1}^{M} \mathbf{a}_m s_m(k) + \mathbf{n}_k \quad \text{pour } 1 \le k \le K \tag{1}$$

Où $\mathbf{r}_k$ vecteur de dimension Nx1 est une transformation plus ou moins linéaire de l'observation $\mathbf{x}_k$ reçue sur les C capteurs. $\mathbf{n}_k$ est un vecteur bruit additif. Chaque source $s_m(k)$ est associée à la signature $\mathbf{a}_m$. Si on considère les statistiques d'ordre 2 l'objectif est de détecter M à partir de la matrice de covariance suivante :

$$\mathbf{B} = \hat{\mathbf{R}}_{\mathbf{xx}} = \frac{1}{K} \sum_{k=1}^{K} \mathbf{r}_k (\mathbf{r}_k)^{\mathbf{H}}$$

D'un point de vue tout à fait général la détection du nombre M est effectuée à partir des N valeurs propres $\lambda_i$ de la matrice **B**.

L'objet de la présente invention concerne un procédé permettant notamment de prendre en compte les signaux mélangés dans le cas de bruit corrélé et/ou coloré, ou encore de bruit non Gaussien, non circulaire, et sans particularité de géométrie particulière de réseau de capteurs. Le procédé fonctionne en présence de sources corrélées et/ou présentant un fort gradient de puissance. Par une extension aux ordres supérieurs, le procédé peut détecter un nombre de sources supérieur au nombre C de capteurs de l'antenne de réception.

L'invention concerne un procédé selon la revendication 1 pour déterminer le nombre de sources incidentes dans un réseau comportant C capteurs recevant N observations.

L'invention concerne aussi un système pour déterminer le nombre de sources incidentes dans un réseau comportant C capteurs recevant N observations caractérisé en ce qu'il comporte au moins un récepteur comprenant un processeur adapté pour exécuter les étapes du procédé explicitées précédemment.

D'autres caractéristiques et avantages du procédé et du système selon l'invention apparaîtront mieux à la lecture de la description qui suit d'un exemple de réalisation donné à titre illustratif et nullement limitatif annexé des figures qui représentent :

- La figure 1, un exemple de système de traitement d'antennes, et
- La figure 2, un exemple d'un réseau de capteurs de position $(x_n, y_n)$.

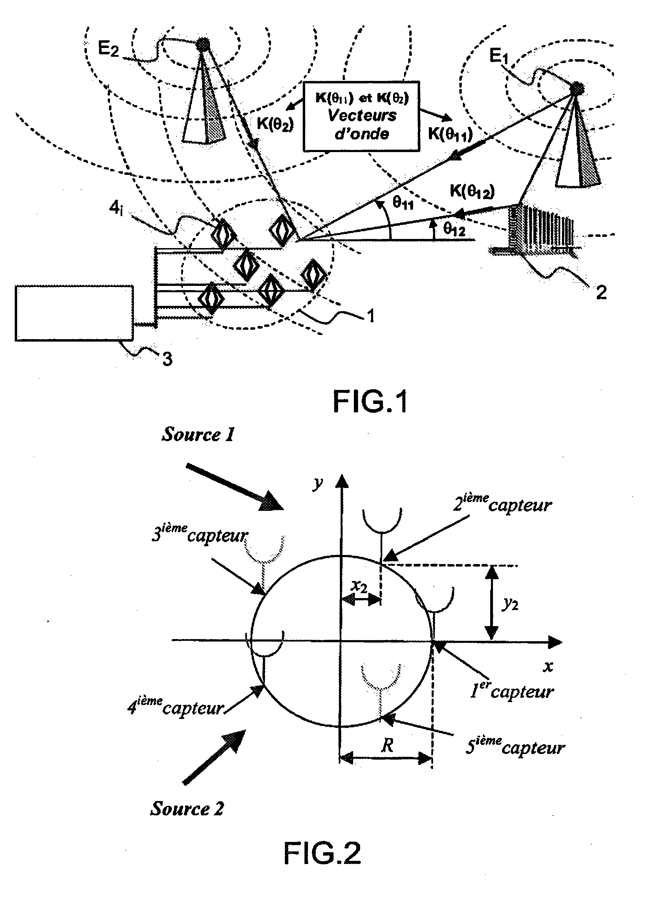

La figure 1 montre un exemple de système de traitement d'antenne qui est composé d'un réseau 1 de capteurs ou d'antennes 4i recevant des signaux issus de différentes sources avec des angles d'arrivée $\theta_{ip}$ (*i* est l'indice de l'émetteur et *p* celui du trajet) différents et d'un récepteur 3. Le récepteur comprend un processeur adapté pour exécuter les étapes du procédé selon l'invention. Le réseau peut également comporter des obstacles 2 sur lesquels les signaux sont réfléchis avant d'être reçus sur les antennes. Les capteurs 4i élémentaires du réseau reçoivent les signaux émis par les sources avec une phase et une amplitude dépendant en particulier de leurs angles d'incidences et de la position des capteurs. Les angles d'incidences sont paramétrés en une dimension ou 1 D par l'azimut $\theta_m$ et en deux dimensions 2D par l'azimut $\theta_m$ et l'élévation $\Delta_m$. La figure 2 schématise un exemple d'un réseau de 6 capteurs recevant les signaux de P=2 sources distinctes.

Le procédé selon l'invention a notamment pour objet de déterminer le nombre M de sources incidentes dans un réseau comportant C capteurs recevant N observations. Pour cela les étapes suivantes vont être exécutées au niveau du récepteur 3.

**Etape 1 :** Calcul de la matrice **B** de dimension NxN observée sur N composantes et obtenue à partir d'un signal reçu sur C capteurs,

**Etape 2 :** Calcul des valeurs propres $\{\lambda_1,, ..., \lambda_N\}$ de la matrice **B,**

**Etape 3 :** Classement des valeurs propres de la matrice **B** du signal pour obtenir $\lambda_1 \geq ... \geq \lambda_N$ et initialisation du nombre de sources reçues à $M = M_{max}$,

**Etape 4.0 :** Initialisation de i à i=M+1

**Etape 4.1 :** i = i- 1

**Etape 4.2 :** Calcul de la moyenne et de l'écart type des valeurs propres de bruit

$\rightarrow$ Calcul de la moyenne des *N- i* plus petites valeurs propres de la matrice B

$$\lambda_{moy} = \frac{1}{N-i} \sum_{j=i+1}^{N} \lambda_j$$

$\rightarrow$ Calcul de l'écart type des *N- i* plus petites valeurs propres de la matrice B

$$\sigma = \sqrt{\frac{1}{N-i} \sum_{j=i+1}^{N} \left( \lambda_j - \lambda_{moy} \right)^2}$$

**Etape 4.3 :** Si $\lambda_i > \lambda_{moy} + \eta\sigma$ alors cette valeur propre appartient à l'espace signal et le nombre de sources présentes dans le mélange est égal à i, où $\eta$ est un seuil qui permet de contrôler la probabilité de fausse alarme. Le procédé est terminé.

**Etape 4.4 :** Si $\lambda_i < \lambda_{moy} + \eta\sigma$, cette valeur propre appartient à l'espace bruit, retourner à 4.1.

Le procédé dépend notamment de deux paramètres $M_{max}$ et $\eta$. $M_{max}$ peut typiquement être égal à *N*/2 selon un exemple non limitatif. $\eta$ est un coefficient donnant la sensibilité du procédé et dépendant d'une probabilité de fausse alarme. Il peut par exemple être choisi tel que $2 \leq \eta \leq 6$.

Selon une variante de mise en oeuvre, l'étape 3 du procédé ordonne les valeurs propres de la matrice par ordre décroissant, l'objectif étant d'obtenir les valeurs propres correspondant au bruit de façon contiguë.

Selon un mode de réalisation, la matrice **B** correspond à la matrice de covariance de l'observation $\mathbf{r}_k = \mathbf{x}(t_k)$. La matrice **B** s'écrit alors :

$$\mathbf{B} = \hat{\mathbf{R}}_{\mathbf{xx}} = \frac{1}{K} \sum_{k=1}^{K} \mathbf{x}(t_k) \mathbf{x}(t_k)^{\mathbf{H}} \qquad (2)$$

Où $\mathbf{x}(t)$ correspond au signal reçu sur le réseau de capteurs et s'écrit :

$$\mathbf{x}(t) = \begin{bmatrix} x_1(t) \\ \cdots \\ x_n(t) \\ \cdots \\ x_N(t) \end{bmatrix} = \sum_{m=1}^{M} \rho_m \; \mathbf{a}(\theta_m) \; \mathbf{s_m}(t) + \mathbf{n}(t) = \mathbf{A} \; \mathbf{s}(t) + \mathbf{n}(t) \qquad (3)$$

$$s_m(t) = s(t) \exp\left(j 2\pi f_m t\right)$$

Où

- $x_n(t)$ est le signal reçu sur le $n$-ième capteur,
- s(t) correspond au signal temporel émis par la source
- $\rho_m$, $\theta_m$, $\tau_m$ sont respectivement l'amplitude, et la direction d'arrivée de la m-ième source.
- $\mathbf{a}(\theta)$ est la réponse du réseau de capteurs à une source de direction $\theta$
- $\mathbf{n}(t)$ est le bruit additif, les composantes de bruit sont indépendantes entre voies de réception et ont pour puissance $\sigma^2$. Le bruit comporte également les interférences éventuelles
- $\mathbf{s}(t) = [s_1(t_1) \dots s_M(t)]^T$, vecteur des signaux temporels des sources
- $\mathbf{A}$ matrice des vecteurs directeurs pour les différents trajets m, $\mathbf{A}= [\mathbf{a}(\theta_1) \dots \mathbf{a}(\theta_M)]$

Dans ce cas N=C.

Selon un autre mode de mise en oeuvre du procédé de l'invention, la matrice considérée **B** correspond à la matrice de covariance spatio-temporelle du signal. $\mathbf{r}_k = \mathbf{x}_f(t_k)$ est un vecteur observation contenant $L$ décalages temporels différents de l'observation $\mathbf{x}(t)$ définie par l'équation (3).

$$\mathbf{x}_f(t) = \begin{bmatrix} \mathbf{x}(t - \tau_1) \\ \cdots \\ \mathbf{x}(t - \tau_i) \\ \cdots \\ \mathbf{x}(t - \tau_L) \end{bmatrix} = \sum_{m=1}^{M} \mathbf{b}(\theta_m, f_m) s_m(f_m, t) + n(t)$$

$$\mathbf{B} = \hat{\mathbf{R}}_{\mathbf{x}_f \mathbf{x}_f} = \frac{1}{K} \sum_{k=1}^{K} \mathbf{x}_f(t_k) \mathbf{x}_f(t_k)^{\mathbf{H}}$$

où $s_m(t)$ et $s_m(f_m, t)$ sont les entrée/sortie d'un filtre de bande finie centré en $f_m$. Dans ce cas N=LC et M représente le nombre de composantes spatio-fréquentielles présentes dans le signal. En présence de porteuses pures, le nombre de composantes spatio-fréquentielles est égal au nombre de sources de l'observation $\mathbf{x}(t)$ définie par l'équation (3)

Selon un autre exemple de mise en oeuvre, la matrice considérée **B** est une estimation de la matrice des inter-cumulants d'ordre 2q des signaux pour K observations du vecteur $\mathbf{x}(t_k)$ de dimension Cx1.

Le procédé estime alors le nombre M de composantes indépendantes de l'espace signal de cette matrice, lequel correspond au nombre de sources reçues lorsque celles-ci sont statistiquement indépendantes. Le modèle de signal s'écrit :

$$\mathbf{x}(t) = \sum_{m=1}^{P} \mathbf{a}(\theta_m) s_m(t) + \mathbf{n}(t)$$

où P est le nombre de sources présentes et M le nombre de composantes indépendantes du mélange.

Sachant que $x_n$ $(t)$ est la n- ième composante de $\mathbf{x}$ $(t)$, l'intercumulant est défini par :

$$cum_{\mathbf{x}}\left(i_1,...,i_{2q}\right)=$$
$$cum\left(x_{i_1}(t),...,x_{i_l}(t),x_{i_{l+1}}(t)^*,...,x_{i_q}(t)^*,x_{i_{q+1}}(t),...,x_{i_{q+l}}(t),x_{i_{q+l+1}}(t)^*,...,x_{i_{2q}}(t)^*\right)$$

pour $1 \leq i_q \leq C$ et où $cum$ $(.)$ désigne le cumulant. Les intercumulants estimés sur $K$ échantillons sont rangés dans la matrice $\mathbf{B}=\hat{\mathbf{R}}_{\mathbf{xx}}$ de la manière suivante :

$$\hat{\mathbf{R}}_{\mathbf{xx}}\left(I\left(\Omega_{row}\right),J\left(\Omega_{col}\right)\right)=\hat{c}_{\mathbf{x}}\left(i_1,...,i_{2q}\right)$$

$$I\left(\Omega_{row}\right)=\sum_{k=1}^{q}2^{q-k}\left(i_k-1\right)+1 \ \text{ avec } \Omega_{row}=\left\{i_1,...,i_q\right\}$$

$$J\left(\Omega_{col}\right)=\sum_{k=1}^{q}2^{q-k}\left(i_{q+k}-1\right)+1 \ \text{ avec } \Omega_{row}=\left\{i_{q+1},...,i_{2q}\right\}$$

où $\hat{c}_{\mathbf{x}}$ $(i_1, ..., i_{2q})$ est une estimée sur K échantillons de $cum_{\mathbf{x}}$ $(i_1, ..., i_{2q})$ . La matrice $\hat{\mathbf{R}}_{\mathbf{xx}}$ s'écrit :

$$\hat{\mathbf{R}}_{\mathbf{xx}}=\left(\mathbf{A}^{\otimes l}\otimes\left(\mathbf{A}^{\otimes(q-l)}\right)^*\right)\hat{\mathbf{R}}_{ss}\left(\mathbf{A}^{\otimes l}\otimes\left(\mathbf{A}^{\otimes(q-l)}\right)^*\right)^{H}+\hat{\mathbf{R}}_{nn}$$

$$\mathbf{A}^{\otimes q}=\underbrace{\mathbf{A}\otimes\cdots\otimes\mathbf{A}}_{q \text{ fois}}$$

Où $\mathbf{A}=[\mathbf{a}\,(\theta_1) ... \mathbf{a}\,(\theta_P)]$ est la matrice des vecteurs directeurs pour les différents trajets indicés par p et où $\otimes$ désigne le produit de Kronecker et $\hat{\mathbf{R}}_{ss}$, $\hat{\mathbf{R}}_{nn}$ sont respectivement les matrices composées des intercumulants d'ordre 2q du signal source $\mathbf{s}$ $(t)$ et du bruit additif $\mathbf{n}$ $(t)$ .

Dans ce mode de réalisation, la matrice $\hat{\mathbf{R}}_{\mathbf{xx}}$ est de dimension NxN où N=C$^q$. Le nombre M de composantes indépendantes à détecter par le procédé est compris entre 0 et M=f(P$^q$) selon l'équation (1) car la matrice $\hat{\mathbf{R}}_{ss}$ est de dimension P$^q$ x P$^q$ (P est le nombre de sources du signal $\mathbf{x}$(t)). En présence de P sources indépendantes, le rang de $\hat{\mathbf{R}}_{\mathbf{xx}}$ à déterminer vaut M=P. Notons que la détermination du rang de la matrice $\hat{\mathbf{R}}_{\mathbf{xx}}$ est à la fois valable pour des algorithmes de goniométrie et pour des algorithmes d'identification aveugle.

Selon un autre mode de réalisation, le procédé comporte les étapes décrits ci- après. En présence de M émetteurs (ou clusters), un système de localisation mesure au cours du temps un ensemble de paramètres caractérisés par les vecteurs $\xi_k$ pour $1\leq k\leq K$. Les vecteurs $\xi_k$ peuvent être composés par l'azimut $\theta_k$ et le rapport signal sur bruit SNR$_k$ d'un des émetteurs à l'instant $t_k$: $\xi_k= [\theta_k \ \text{SNR}_k]^T$ ($^T$ désigne la transposée d'un vecteur) . Ces vecteurs peuvent aussi être composés du vecteur directeur $\mathbf{a}\,(\theta_k)$ d'une des sources avec son rapport signal sur bruit : $\xi_k= [\mathbf{a}\,(\theta_k)^T \ \text{SNR}_k]^T$. De façon plus générale la $k^{\text{ième}}$ mesure $\hat{\zeta}_k$ est entachée d'une erreur et est associée au $m^{\text{ième}}$ émetteur de la façon suivante :

$$\hat{\zeta}_k = \xi_m + \mathbf{e}_k \ \ \text{ pour } 1\leq k\leq K \ \text{ et } 1\leq m\leq M \hspace{2cm} (4)$$

Où $\mathbf{e}_k$ est le vecteur bruit associé à la $k^{\text{ième}}$ mesure et $\xi_m$ le vecteur de paramètre associé au $m^{\text{ième}}$ émetteur.
A partir de $\hat{\zeta}_k$ il est possible de construire une observation $f(\hat{\zeta}_k)$ de dimension plus grande. En particulier pour un système de goniométrie qui produit des azimuts $\theta_k$ au cours du temps, il est possible de construire $\hat{\zeta}_k = [\;\theta_k\;\text{SNR}_k]^\mathsf{T}$ et d'effectuer la transformation non linéaire suivante :

$$f(\hat{\zeta}_k) = f\left(\hat{\zeta}_k = \begin{bmatrix} \hat{\theta}_k \\ SNR_k \end{bmatrix}\right) = \begin{bmatrix} 1 \\ \exp(j\hat{\theta}_k) \\ \vdots \\ \exp(jL\hat{\theta}_k) \\ SNR_k \end{bmatrix} \tag{5}$$

en construisant alors l'observation suivante

$$\mathbf{r}_k = f(\hat{\zeta}_k) \otimes f(\hat{\zeta}_k) \tag{6}$$

qui obéit à l'équation (1), avec la signature $\mathbf{a}_m = f(\zeta_m) \otimes f(\zeta_m)$, il est possible d'estimer le nombre M de clusters à partir des valeurs propres de la matrice de covariance suivante

$$\hat{\mathbf{R}}_{xx} = \frac{1}{K} \sum_{k=1}^{K} [f(\hat{\zeta}_k) \otimes f(\hat{\zeta}_k)] \, [f(\hat{\zeta}_k) \otimes f(\hat{\zeta}_k)]^{\mathsf{H}} \tag{7}$$

Pour tous les exemples de mise en oeuvre décrits précédemment, dans le cas où la matrice **B** n'est pas de rang plein, le procédé considère les **R** valeurs propres non nulles de la matrice **B.**

Le procédé selon l'invention permet notamment d'estimer le nombre de sources présentes dans un mélange pour une structure de bruit quelconque, le bruit pouvant être de statistique et de corrélation quelconque. Le procédé offre une robustesse par rapport au nombre d'échantillons de signal disponibles. Il est robuste par rapport à un comportement asymptotique où le nombre d'observations est grand. Le procédé peut aussi être utilisé dans le cas d'un nombre d'échantillons de signal disponibles peu élevé. Le procédé fonctionne en présence de sources corrélées ou encore présentant un fort gradient de puissance. Le procédé fonctionne pour des géométries quelconques de réseau. Le procédé peut également estimer un nombre de sources supérieur au nombre de capteurs C de l'antenne par une extension aux ordres supérieurs.

**Références**

[1] H.Akaike, « A new look at the statistical model identification », IEEE Trans on Aut. Control, 19, N°6, Dec 1974
[2] Lu Gan; Xin Qi; Liping Li; Huaguo Zhang, "Estimation of the number of signals in the présence of color noise", ICCCAS.2009
[3] An, Zhijuan; Su, Hongtao; Bao, Zheng; ,"A New Method for Fast Estimation of Number of Signals", IEEE 2008
[4] O.Michel, P.Larzabal, H.Clergeot, "Critères de détection du nombre de sources corrélées pour les méthodes HR en traitement d'antenne", GRETSI91 Juan-les-Pins

**Revendications**

1. Procédé pour déterminer le nombre de sources incidentes dans un réseau comportant C capteurs (4i) recevant N observations et un récepteur (3) adapté **caractérisé en ce qu'**il comporte au moins les étapes suivantes :

   **Etape 1 :** Calculer la matrice **B** de dimension NxN observée sur N composantes et obtenue à partir d'un signal ou données reçu sur C capteurs d'observation,

$$B = \hat{R}_{xx} = \frac{1}{K} \sum_{k=1}^{K} r_k (r_k)^H$$

Où $r_k$ vecteur de dimension Nx1 est une transformation plus ou moins linéaire de l'observation $x_k$ reçue sur les C capteurs

**Etape 2 :** Calculer les valeurs propres $\{\lambda_1, ..., \lambda_N\}$ de la matrice **B**,

**Etape 3 :** Classer lesdites valeurs propres de la matrice **B** du signal pour obtenir $\lambda_1 \geq ... \geq \lambda_N$ et initialisation du nombre de sources reçues à $M = M_{max}$, $M_{max}$ *peut être pris égal à N/2 par exemple.*

**Etape 4.0 :** Initialisation de i à i=M+1

**Etape 4.1 :** i = i - 1

**Etape 4.2 :** Calculer la moyenne et l'écart type des valeurs propres de bruit

→ Calculer la moyenne des *N- i* plus petites valeurs propres de la matrice **B**

$$\lambda_{moy} = \frac{1}{N-i} \sum_{j=i+1}^{N} \lambda_j$$

→ Calculer l'écart type des *N- i* plus petites valeurs propres de la matrice **B**

$$\sigma = \sqrt{\frac{1}{N-i} \sum_{j=i+1}^{N} \left( \lambda_j - \lambda_{moy} \right)^2}$$

**Etape 4.3 :** Si $\lambda_i > \lambda_{moy} + \eta\sigma$ alors cette valeur propre appartient à l'espace signal et le nombre de sources présentes dans le mélange est égal à i, où $\eta$ est un seuil qui permet de contrôler la probabilité de fausse alarme,

**Etape 4.4 :** Si $\lambda_i < \lambda_{moy} + \eta\sigma$, cette valeur propre appartient à l'espace bruit, retourner à l'étape 4.1.

2. Procédé selon la revendication 1 **caractérisé en ce que** l'on ordonne les valeurs propres de la matrice par ordre décroissant.

3. Procédé selon la revendication 1 **caractérisé en ce que** la matrice **B** est la valeur estimée de la matrice de covariance de l'observation :

$$B = \hat{R}_{xx} = \frac{1}{K} \sum_{k=1}^{K} x(t_k) x(t_k)^H$$

$$r_k = x(t_k)$$

$x(t)$ est le signal reçu sur le réseau de capteurs, vecteur de taille C, et $x(t_k)$ est le signal reçu pour l'instant $t_k$

4. Procédé selon la revendication 1 **caractérisé en ce que** la matrice **B** est la valeur estimée de la matrice de covariance spatio-temporelle de l'observation:

$$B = \hat{R}_{x_f x_f} = \frac{1}{K} \sum_{k=1}^{K} x_f(t_k) x_f(t_k)^H$$

$\mathbf{r}_k = \mathbf{x}_f(t_k)$ est un vecteur observation contenant $L$ décalages temporels différents de l'observation $\mathbf{x}(t)$ définie par l'équation (3).

$$\mathbf{x}_f(t) = \begin{bmatrix} \mathbf{x}(t-\tau_1) \\ \cdots \\ \mathbf{x}(t-\tau_i) \\ \cdots \\ \mathbf{x}(t-\tau_L) \end{bmatrix} = \sum_{m=1}^{M} \mathbf{b}(\theta_m, f_m) s_m(f_m, t) + n(t)$$

où $s_m(t)$ et $s_m(f_m,t)$ sont les entrée/sortie d'un filtre de bande finie centré en $f_m$

5. Procédé selon la revendication 1 **caractérisé en ce que** dans le cas où la matrice B n'est pas de rang plein, le procédé considère les R valeurs propres non nulles de la matrice de covariance.

6. Procédé selon la revendication 1 **caractérisé en ce que** la matrice considérée **B** est une estimation de la matrice des inter- cumulants d'ordre 2q des signaux pour K observations du vecteur $\mathbf{x}(t_k)$ de dimension Cx1 et **en ce que** le procédé comporte une étape d'estimation de la dimension de l'espace signal de la matrice de statistiques considérée, laquelle correspond au nombre de sources lorsque celles- ci sont indépendantes en utilisant le modèle signal suivant

$$\mathbf{x}(t) = \sum_{m=1}^{P} \mathbf{a}(\theta_m) s_m(t) + \mathbf{n}(t)$$

où P est le nombre de sources présentes
Sachant que $x_n(t)$ est la n- ième composante de x (t), l'intercumulant est défini par :

$$cum_{\mathbf{x}}\left(i_1,...,i_{2q}\right) =$$

$$cum\left(x_{i_1}(t),...,x_{i_i}(t), x_{i_{i+1}}(t)^*,...,x_{i_q}(t)^*, x_{i_{q+1}}(t),...,x_{i_{q+l}}(t), x_{i_{q+l+1}}(t)^*,...,x_{i_{2q}}(t)^*\right)$$

pour $1 \le i_q \le C$ et où *cum (.)* désigne le cumulant,
les intercumulants estimés sur *K* échantillons sont ensuite rangés dans la matrice $\mathbf{B} = \hat{\mathbf{R}}_{\mathbf{xx}}$ de la manière suivante :

$$\hat{\mathbf{R}}_{\mathbf{xx}}\left(I(\Omega_{row}), J(\Omega_{col})\right) = \hat{c}_{\mathbf{x}}\left(i_1,...,i_{2q}\right)$$

$$I(\Omega_{row}) = \sum_{k=1}^{q} 2^{q-k}(i_k - 1) + 1 \ \ \text{avec} \ \Omega_{row} = \left\{i_1,...,i_q\right\}$$

$$J(\Omega_{col}) = \sum_{k=1}^{q} 2^{q-k}(i_{q+k} - 1) + 1 \ \ \text{avec} \ \Omega_{row} = \left\{i_{q+1},...,i_{2q}\right\}$$

où $\hat{c}_x(i_1, ..., i_{2q})$ est une estimée sur K échantillons de $cum_x(i_1, ..., i_{2q})$, $\hat{\mathbf{R}}_{\mathbf{xx}}$ s'écrit :

$$\hat{\mathbf{R}}_{xx} = \left( \mathbf{A}^{\otimes l} \otimes \left( \mathbf{A}^{\otimes(q-l)} \right)^{*} \right) \hat{\mathbf{R}}_{ss} \left( \mathbf{A}^{\otimes l} \otimes \left( \mathbf{A}^{\otimes(q-l)} \right)^{*} \right)^{H} + \hat{\mathbf{R}}_{nn}$$

$$\mathbf{A}^{\otimes q} = \underbrace{\mathbf{A} \otimes \cdots \otimes \mathbf{A}}_{q \text{ fois}}$$

où $\mathbf{A} = [\mathbf{a}(\theta_1) \dots \mathbf{a}(\theta_P)]$ est la matrice des vecteurs directeurs pour les différents trajets indicés par p et où $\otimes$ désigne le produit de Kronecker et $\hat{\mathbf{R}}_{ss}$, $\hat{\mathbf{R}}_{nn}$ sont respectivement les matrices composées des intercumulants d'ordre 2q du signal source $\mathbf{s}(t)$ et du bruit additif $\mathbf{n}(t)$.

**7.** Procédé selon la revendication 1 **caractérisé en ce qu'**il comporte au moins les étapes suivantes :

effectuer des mesures au cours du temps d'un ensemble de paramètres caractéristiques des émetteurs, les mesures étant **caractérisées par** les vecteurs $\xi_k$ pour $1 \le k \le K$, les vecteurs $\xi_k$ étant composés par l'azimut $\theta_k$ et le rapport signal sur bruit $SNR_k$ d'un des émetteurs à l'instant $t_k$: $\xi_k = [\theta_k \ SNR_k]^T$ ou par le vecteur directeur $a(\theta_k)$ d'une des sources avec son rapport signal sur bruit : $\xi_k = [\mathbf{a}(\theta_k)^T SNR_k]^T$,
à partir de $\hat{\zeta}_k$ construire une observation $f(\hat{\zeta}_k)$
puis construire l'observation suivante

$$\mathbf{r}_k = f(\hat{\zeta}_k) \otimes f(\hat{\zeta}_k)$$

qui obéit à l'équation (1), avec la signature $\mathbf{a}_m = f(\zeta_m) \otimes f(\zeta_m)$ estimer le nombre M de clusters à partir des valeurs propres de la matrice de covariance suivante :

$$\mathbf{B} = \hat{\mathbf{R}}_{xx} = \frac{1}{K} \sum_{k=1}^{K} [f(\hat{\zeta}_k) \otimes f(\hat{\zeta}_k)] [f(\hat{\zeta}_k) \otimes f(\hat{\zeta}_k)]^H$$

**8.** Procédé selon la revendication 7 **caractérisé en ce que** pour un système de goniométrie qui génère des valeurs d'azimuts $\theta_k$ au cours du temps, le procédé construit $\hat{\zeta}_k = [\theta_k SNR_k]^T$ et effectue la transformation non linéaire suivante :

$$f(\hat{\zeta}_k) = f\left( \hat{\zeta}_k = \begin{bmatrix} \hat{\theta}_k \\ SNR_k \end{bmatrix} \right) = \begin{bmatrix} 1 \\ \exp(j\hat{\theta}_k) \\ \vdots \\ \exp(jL\hat{\theta}_k) \\ SNR_k \end{bmatrix}$$

**9.** Procédé selon la revendication 1 **caractérisé en ce que** la valeur de seuil est fixée entre 2 et 6.

**10.** Système pour déterminer le nombre de sources incidentes dans un réseau comportant C capteurs (4i) recevant N observations **caractérisé en ce qu'**il comporte au moins un récepteur (3) comprenant un processeur adapté pour exécuter les étapes du procédé selon l'une des revendications 1 à 9.

**Patentansprüche**

**1.** Verfahren zur Bestimmung der Anzahl der Störquellen in einem Netzwerk, das C Sensoren (4i), die N Beobachtungen empfangen, und einen geeigneten Empfänger (3) aufweist, **dadurch gekennzeichnet, dass** es mindestens die folgenden Schritte aufweist:

Schritt 1: Berechnen der über N Komponenten beobachteten und von einem Signal oder Daten über C Beobachtungssensoren erhaltenen Matrix B der beobachteten Dimension NxN,

$$B = \hat{R}_{xx} = \frac{1}{K} \sum_{k=1}^{K} r_k (r_k)^{H}$$

wobei der Vektor $r_k$ der Dimension Nx1 eine mehr oder weniger lineare Transformation der über die C Sensoren erhaltenen Beobachtung $x_k$ ist,

Schritt 2: Berechnen der Eigenwerte $\{\lambda_1,..., \lambda_N\}$ der Matrix B,

Schritt 3: Ordnen der Eigenwerte der Matrix B des Signals, um $\lambda_1, \geq... \geq \lambda_N$ zu erhalten, und Initialisieren der Anzahl der bei $M = M_{max}$ erhaltenen Quellen,

$M_{max}$ kann beispielsweise gleich N/2 sein,

Schritt 4.0: Initialisieren von i auf i=M+1,

Schritt 4.1: i = i - 1,

Schritt 4.2: Berechnen des Mittelwerts und der Standardabweichung der Rauscheigenwerte,

→ Berechnen des Mittelwerts der *N-i* kleineren Eigenwerte der Matrix B,

$$\lambda_{moy} = \frac{1}{N-i} \sum_{j=i+1}^{N} \lambda_j$$

,

→ Berechnen der Standardabweichung der *N-i* kleineren Eigenwerte der Matrix

$$\sigma = \sqrt{\frac{1}{N-i} \sum_{j=i+1}^{N} \left( \lambda_j - \lambda_{moy} \right)^2}$$

,

Schritt 4.3: wenn $\lambda_1 > \lambda_{moy} + \eta\sigma$, dann gehört dieser Eigenwert zum Signalraum, und die Anzahl der Quellen, die in der Mischung vorhanden ist, ist gleich i, wobei $\eta$ ein Grenzwert ist, der erlaubt, die Wahrscheinlichkeit falschen Alarms zu kontrollieren,

Schritt 4.4: wenn $\lambda_1 < \lambda_{moy} + \eta\sigma$, dann gehört dieser Eigenwert zum Rauschraum, zurück zu Schritt 4.1.

2. Verfahren nach Anspruch 1, **dadurch gekennzeichnet, dass** die Eigenwerte der Matrix abfallend geordnet werden.

3. Verfahren nach Anspruch 1, **dadurch gekennzeichnet, dass** die Matrix B der geschätzte Wert der Kovarianzmatrix der Beobachtung ist:

$$B = \hat{R}_{xx} = \frac{1}{K} \sum_{k=1}^{K} x(t_k) x(t_k)^{H}$$

$$r_k = x(t_k)$$

x(t) ist das über das Sensorennetzwerk erhaltene Signal, Größenvektor C, und x($t_k$) ist das für den Moment $t_k$ erhaltene Signal.

4. Verfahren nach Anspruch 1, **dadurch gekennzeichnet, dass** die Matrix B der geschätzte Wert der Raum-Zeit-Kovarianzmatrix der Beobachtung ist:

$$\mathbf{B} = \hat{\mathbf{R}}_{\mathbf{x}_f \mathbf{x}_f} = \frac{1}{K} \sum_{k=1}^{K} \mathbf{x}_f(t_k) \mathbf{x}_f(t_k)^{\mathbf{H}}$$

$r_k = x_f(t_k)$ ist ein Beobachtungsvektor, der $L$ zeitliche Verschiebungen enthält, die sich von der durch die Gleichung (3) definierte Beobachtung x(t) unterscheiden,

$$\mathbf{x}_f(t) = \begin{bmatrix} \mathbf{x}(t - \tau_1) \\ \cdots \\ \mathbf{x}(t - \tau_i) \\ \cdots \\ \mathbf{x}(t - \tau_L) \end{bmatrix} = \sum_{m=1}^{M} \mathbf{b}(\theta_m, f_m) s_m(f_m, t) + n(t)$$

wobei $s_m(t)$ und $s_m(f_m,t)$ der Eingang/Ausgang eines in $f_m$ zentrierten Filters eines endlichen Bands sind.

5. Verfahren nach Anspruch 1, **dadurch gekennzeichnet, dass**, wenn die Matrix B nicht vollrangig ist, das Verfahren die R Eigenwerte, die nicht null sind, der Kovarianzmatrix berücksichtigt.

6. Verfahren nach Anspruch 1, **dadurch gekennzeichnet, dass** die berücksichtigte Matrix B eine Schätzung der Matrix der Interkumulanten der Ordnung 2q der Signale für K Beobachtungen des Vektors $x(t_k)$ der Dimension Cx1 ist und dass das Verfahren einen Schritt der Schätzung der Dimension des Signalraums der berücksichtigten Statistikmatrix aufweist, die der Anzahl der Quellen entspricht, wenn diese unabhängig sind, bei Verwendung des folgenden Modellsignals:

$$\mathbf{x}(t) = \sum_{m=1}^{P} \mathbf{a}(\theta_m) s_m(t) + \mathbf{n}(t)$$

wobei P die Anzahl der vorhandenen Quellen ist,
wobei $x_n(t)$ die n-te Komponente von x $(t)$ ist, wobei die Interkumulante definiert ist durch:

$$cum_{\mathbf{x}}\left(i_1, ..., i_{2q}\right) =$$

$$cum\left(x_{i_1}(t), ..., x_{i_q}(t), x_{i_{q+1}}(t)^*, ..., x_{i_q}(t)^*, x_{i_{q+1}}(t), ..., x_{i_{q+l}}(t), x_{i_{q+l+1}}(t)^*, ..., x_{i_{2q}}(t)^*\right)$$

für $1 \leq i_q \leq C$ und wobei $cum(.)$ die Kumulante bezeichnet,
dann sind die über K Proben geschätzten Interkumulanten folgendermaßen in die Matrix $\mathbf{B} = \hat{\mathbf{R}}_{\mathbf{xx}}$ eingeordnet:

$$\hat{\mathbf{R}}_{\mathbf{xx}}\left(I(\Omega_{row}), J(\Omega_{col})\right) = \hat{c}_{\mathbf{x}}\left(i_1, ..., i_{2q}\right)$$

$$I\left(\Omega_{row}\right)=\sum_{k=1}^{q} 2^{q-k}\left(i_k-1\right)+1 \quad \text{mit } \Omega_{row}=\left\{i_1,...,i_q\right\}$$

$$J\left(\Omega_{col}\right)=\sum_{k=1}^{q} 2^{q-k}\left(i_{q+k}-1\right)+1 \quad \text{mit } \Omega_{row}=\left\{i_{q+1},...,i_{2q}\right\}$$

wobei $\hat{c}_x\ (i_1, ..., i_{2q})$ ein Shätzwert über K Proben von $cum_x\ (i_1, ..., i_{2q})$ ist, wobei $\hat{R}_{xx}$ lautet:

$$\hat{R}_{xx}=\left(A^{\otimes l}\otimes\left(A^{\otimes(q-l)}\right)^*\right)\hat{R}_{ss}\left(A^{\otimes l}\otimes\left(A^{\otimes(q-l)}\right)^*\right)^H+\hat{R}_{nn}$$

$$A^{\otimes q}=\underbrace{A\otimes\cdots\otimes A}_{q\ \text{fois}}$$

wobei $A$= [$a\ (\theta_1)$ ... $a\ (\theta_p)$ ] die Matrix der führenden Vektoren für die verschiedenen, mit p bezeichneten Wege ist, wobei $\otimes$ das Kroneckerprodukt bezeichnet und $\hat{R}_{ss}$, $\hat{R}_{nn}$ jeweils die Matrizen sind, die aus den Interkumulanten der Ordnung 2q des Quellsignals s $(t)$ und des additiven Rauschens n $(t)$ zusammengesetzt sind.

7. Verfahren nach Anspruch 1, **dadurch gekennzeichnet, dass** es mindestens die folgenden Schritte aufweist:

Durchführen von Messungen, im Laufe der Zeit, einer Parametergruppe, die für Sender charakteristisch sind, wobei die Messungen durch die Vektoren $\xi_k$ für $1\leq k\leq K$ charakteristisch sind, wobei die Vektoren $\xi_k$ aus dem Azimut $\theta_k$ und dem Signal/ RauschVerhältnis $SNR_k$ eines der Sender zum Zeitpunkt $t_k$: $\xi_k$=[ $\theta_k$ $SNR_k$]$^T$ oder aus dem führenden Vektor a ($\theta_k$) einer der Quellen mit ihrem Signal/ Rausch- Verhältnis $\xi_k$= [ a ($\theta_k$)$^T$ $SNR_k$]$^T$ zusammengesetzt sind,
Konstruktion einer Beobachtung $f(\hat{\zeta}_k)$ aus $\hat{\zeta}_k$,
danach Konstruktion der nächsten Beobachtung

$$r_k=f(\hat{\zeta}_k)\otimes f(\hat{\zeta}_k),$$

die der Gleichung (1) folgt, mit der Signatur $a_m=f(\zeta_m)\otimes f(\zeta_m)$,
Schätzung der Clusteranzahl M ausgehend von den Eigenwerten der folgenden Kovarianzmatrix:

$$B=\hat{R}_{xx}-\frac{1}{K}\sum_{k=1}^{K}\ [f(\hat{\zeta}_k)\otimes f(\hat{\zeta}_k)]\ [f(\hat{\zeta}_k)\otimes f(\hat{\zeta}_k)]^H .$$

8. Verfahren nach Anspruch 7, **dadurch gekennzeichnet, dass** für ein Goniometriesystem, das im Laufe der Zeit Azimutwerte $\theta_k$ generiert, das Verfahren $\hat{\zeta}_k$=[$\theta_k$ $SNR_k$]$^T$ die folgende nichtlineare Transformation konstruiert und durchführt:

$$f(\hat{\xi}_k) = f\left(\xi_k = \begin{bmatrix} \hat{\theta}_k \\ SNR_k \end{bmatrix}\right) = \begin{bmatrix} 1 \\ \exp(j\hat{\theta}_k) \\ \vdots \\ \exp(jL\hat{\theta}_k) \\ SNR_k \end{bmatrix}.$$

9. Verfahren nach Anspruch 1, **dadurch gekennzeichnet, dass** der Grenzwert zwischen 2 und 6 festgelegt ist.

10. System zur Bestimmung der Anzahl der Störquellen in einem Netzwerk, das C Sensoren (4i) aufweist, die N Beobachtungen empfangen, **dadurch gekennzeichnet, dass** es mindestens einen Empfänger (3) aufweist, der einen Prozessor umfasst, der für die Durchführung der Schritte des Verfahrens nach einem der Ansprüche 1 bis 9 geeignet ist.

**Claims**

1. A method for determining the number of incident sources in an array comprising C sensors (4i) receiving N observations and one adapted receiver (3), **characterised in that** it comprises at least the following steps:

Step 1: calculating the matrix B of dimension NxN observed on N components and obtained from a signal or data received on C observation sensors,

$$B = \hat{R}_{xx} = \frac{1}{K} \sum_{k=1}^{K} r_k \, (r_k)^H$$

where the $r_k$ vector of dimension Nx1 is a more or less linear transformation of the observation $x_k$ received on the C sensors
Step 2: calculating the eigenvalues $\{\lambda_1, ..., \lambda_N\}$ of the matrix B
Step 3: classifying said eigenvalues of the matrix B of the signal so as to obtain $\lambda_1 \geq ... \geq \lambda_N$ and setting the number of sources received to $M = M_{max}$,
$M_{max}$ can be taken to be equal to N/2, for example
Step 4.0: setting i to i=M+1
Step 4.1: i=i-1
Step 4.2: calculating the mean and the standard deviation of the noise eigenvalues:

$\rightarrow$ calculating the mean of the *N-i* lowest eigenvalues of the matrix B,

$$\lambda_{av} = \frac{1}{N-i} \sum_{j=i+1}^{N} \lambda_j$$

$\rightarrow$ calculating the standard deviation of the *N-i* lowest eigenvalues of the matrix B,

$$\sigma = \sqrt{\frac{1}{N-i} \sum_{j=i+1}^{N} \left(\lambda_j - \lambda_{moy}\right)^2}$$

Step 4.3: if $\lambda_1 > \lambda_{moy(av)} + \eta\sigma$, then this eigenvalue belongs to the signal space and the number of sources present in the mixture is equal to i, where $\eta$ is a threshold that allows the false alarm probability to be controlled

Step 4.4: if $\lambda_1 < \lambda_{moy(av)} + \eta\sigma$, then this eigenvalue belongs to the noise space, return to step 4.1.

2. The method according to claim 1, **characterised in that** the eigenvalues of the matrix are arranged in decreasing order.

3. The method according to claim 1, **characterised in that** the matrix B is the estimated value of the covariance matrix of the observation:

$$\mathbf{B} = \hat{\mathbf{R}}_{xx} = \frac{1}{K}\sum_{k=1}^{K} \mathbf{x}(t_k)\mathbf{x}(t_k)^{\mathbf{H}}$$

$r_k = x(t_k) x(t)$ is the signal received on the array of sensors, vector of size C, and $x(t_k)$ is the signal received for the instant $t_k$.

4. The method according to claim 1, **characterised in that** the matrix B is the estimated value of the space-time covariance matrix of the observation:

$$\mathbf{B} = \hat{\mathbf{R}}_{x_f x_f} = \frac{1}{K}\sum_{k=1}^{K} \mathbf{x}_f(t_k)\mathbf{x}_f(t_k)^{\mathbf{H}}$$

$r_k = x_f(t_k)$ is an observation vector containing $L$ time shifts which differ from the observation x(t) defined by the equation (3):

$$\mathbf{x}_f(t) = \begin{bmatrix} \mathbf{x}(t-\tau_1) \\ \cdots \\ \mathbf{x}(t-\tau_i) \\ \cdots \\ \mathbf{x}(t-\tau_L) \end{bmatrix} = \sum_{m=1}^{M} \mathbf{b}(\theta_m, f_m)s_m(f_m, t) + n(t)$$

where $s_m(t)$ and $s_m(f_m, t)$ are the inputs/outputs of a finite band filter centred on $f_m$.

5. The method according to claim 1, **characterised in that**, in the event that the matrix B is not full ranked, the method considers the R non-zero eigenvalues of the covariance matrix.

6. The method according to claim 1, **characterised in that** the considered matrix B is an estimate of the matrix of the inter- cumulants of order 2q of the signals for K observations of the vector $x(t_k)$ of dimension Cx1, and **in that** the method comprises a step of estimating the dimension of the signal space of the matrix of considered statistics, which corresponds to the number of sources, when these are independent, using the following signal model:

$$\mathbf{x}(t) = \sum_{m=1}^{P} \mathbf{a}(\theta_m) s_m(t) + \mathbf{n}(t)$$

where P is the number of sources present
given that $x_n(t)$ is the n- th component of $x(t)$, the inter- cumulant is defined by:

$$cum_x(i_1,...i_{2q})=$$

$$cum\left( x_{i_1}(t),...,x_{i_l}(t), x_{i_{l+1}}(t)^*,...,x_{i_q}(t)^*, x_{i_{q+1}}(t),...,x_{i_{q+l}}(t), x_{i_{q+l+1}}(t)^*,...,x_{i_{2q}}(t)^* \right)$$

for $1 \le i_q \le C$ and where *cum (.)* designates the cumulant
the inter- cumulants estimated on K samples are then stored in the matrix $B=\hat{R}_{xx}$ as follows:

$$\hat{R}_{xx}\left( I(\Omega_{row}), J(\Omega_{col}) \right) = \hat{c}_x\left( i_1,...,i_{2q} \right)$$

$$I\left( \Omega_{row} \right) = \sum_{k=1}^{q} 2^{q-k}\left( i_k - 1 \right) + 1 \quad \text{with} \quad \Omega_{row} = \{ i_1,...,i_q \}$$

$$J\left( \Omega_{col} \right) = \sum_{k=1}^{q} 2^{q-k}\left( i_{q+k} - 1 \right) + 1 \quad \text{with} \quad \Omega_{row} = \{ i_{q+1},...,i_{2q} \}$$

where $\hat{c}_x (i_1, ..i_{2q})$ is an estimate on K samples of $cum_x (i_1, ...i_{2q})$,
$\hat{R}_{xx}$ is expressed as:

$$\hat{R}_{xx} = \left( A^{\otimes l} \otimes \left( A^{\otimes(q-l)} \right)^* \right) \hat{R}_{ss} \left( A^{\otimes l} \otimes \left( A^{\otimes(q-l)} \right)^* \right)^H + \hat{R}_{nn}$$

$$A^{\otimes q} = \underbrace{A \otimes \cdots \otimes A}_{q \text{ fois}}$$

where A= [a $(\theta_1)$ ...a $(\theta_P)$ ] is the matrix of the direction vectors for the various paths indexed by p and where $\otimes$ designates the Kronecker product and $\hat{R}_{ss}$, $\hat{R}_{nn}$ are respectively the matrices composed of the inter- cumulants of order 2q of the source signal s *(t)* and of the additive noise n *(t)* .

7. The method according to claim 1, **characterised in that** it comprises at least the following steps:

carrying out measurements over time of a set of parameters which are characteristic for the transmitters, the measurements being **characterised by** the vectors $\xi_k$ for $1 \le k \le K,$ the vectors $\xi_k$ being composed by the azimuth $\theta_k$ and the signal- to- noise ratio $SNR_k$ of one of the transmitters at the instant $t_k$: $\xi_k = [\theta_k \ SNR_k]^T$ or by the direction vector a $(\theta_k)$ of one of the sources with its signal- to- noise ratio: $\xi_k = [a (\theta_k)^T \ SNR_k]^T$ constructing an observation $f(\hat{\zeta}_k)$ on the basis of $\hat{\zeta}_k$
then constructing the following observation:

$$r_k = f(\hat{\zeta}_k) \otimes f(\hat{\zeta}_k) \quad ,$$

which complies with the equation (1) with the signature $a_m = f(\zeta_m) \otimes f(\zeta_m)$
estimating the number M of clusters on the basis of the eigenvalues of the following covariance matrix:

$$B = \hat{R}_{xx} = \frac{1}{K} \sum_{k=1}^{K} [f(\hat{\zeta}_k) \otimes f(\hat{\zeta}_k)] [f(\hat{\zeta}_k) \otimes f(\hat{\zeta}_k)]^H$$

8. The method according to claim 7, **characterised in that**, for a goniometry system that generates values of the azimuths $\theta_k$ over time, the method constructs $\hat{\zeta}_k = [\theta_k SNR_k]^T$ and carries out the following non-linear transformation:

$$f(\hat{\zeta}_k) = f\left(\hat{\zeta}_k = \begin{bmatrix} \hat{\theta}_k \\ SNR_k \end{bmatrix}\right) = \begin{bmatrix} 1 \\ \exp(j\hat{\theta}_k) \\ \vdots \\ \exp(jL\hat{\theta}_k) \\ SNR_k \end{bmatrix}$$

9. The method according to claim 1, **characterised in that** the threshold value is set between 2 and 6.

10. A system for determining the number of incident sources in an array comprising C sensors (4i) receiving N observations, **characterised in that** it comprises at least one receiver (3) comprising a processor designed to execute the steps of the method according to any one of claims 1 to 9.

## FIG.1

## FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **KRITCHMAN S et al.** Nonparametric détection of the number of signals and random matrix therory. *SIGNALS, SYSTEMS AND COMPUTERS, 2008 42 ND ASILOMAR CONFERENCE,* 26 Octobre 2008, ISBN 978-1-4244-2940-0, 1680-1683
- Detection of the number of signals : a predicted eigne-threshold approach. **CHEN W et al.** IEEE TRANSACTIONS ON SIGNAL PROCESSING. IEEE SERVICE CENTER, 01 Mai 1991, vol. 39, 1088-1098
- **H.AKAIKE.** A new look at the statistical model identification. *IEEE Trans on Aut. Control,* Décembre 1974, vol. 19 (6
- **LU GAN ; XIN QI ; LIPING LI ; HUAGUO ZHANG.** Estimation of the number of signals in the présence of color noise. *ICCCAS,* 2009
- **AN, ZHIJUAN ; SU, HONGTAO ; BAO, ZHENG.** A New Method for Fast Estimation of Number of Signals. *IEEE,* 2008